Europäisches Patentamt

European Patent Office

Office européen des brevets

(19)

(11) Numéro de publication: **0 190 975**
**B1**

(12) FASCICULE DE BREVET EUROPEEN

(45) Date de publication du fascicule du brevet: **18.07.90**

(51) Int. Cl.⁵: **C 02 F 9/00, C 02 F 1/52**

(21) Numéro de dépôt: **86400227.4**

(22) Date de dépôt: **03.02.86**

(54) **Procédé et installation de traitement d'eaux résiduaires.**

(30) Priorité: **01.02.85 FR 8501465**

(43) Date de publication de la demande:
**13.08.86 Bulletin 86/33**

(45) Mention de la délivrance du brevet:
**18.07.90 Bulletin 90/29**

(84) Etats contractants désignés:
**CH DE GB IT LI**

(56) Documents cités:
**DE-A-2 413 243**
**FR-A-2 156 636**
**FR-A-2 373 492**
**FR-A-2 404 606**

(73) Titulaire: **SOAF: Société Anonyme dite**
**Z.I. de la Gare Sainte-Luce-Sur-Loire**
**F-44470 Carquefou (FR)**

(72) Inventeur: **Andre, Albert**
**16, rue Félix Dugas**
**F-44690 Maisdon/Sevres (FR)**

(74) Mandataire: **Bonnetat, Christian et al**
**CABINET BONNETAT 23, Rue de Léningrad**
**F-75008 Paris (FR)**

Courier Press, Leamington Spa, England.

## Description

La présente invention concerne un procédé de traitement de matières de vidange, contenues dans des réservoirs d'eaux résiduaires, ainsi qu'une installation autonome mobile pour la mise en oeuvre dudit procédé.

On connaît déjà, notamment par la demande de brevet français publiée no. 2 404 606 de Ake STIGEBRANDT, une installation mobile de collecte et de traitement de matières de vidange comprenant un réservoir principal de collecte et de traitement pouvant être relié à un réservoir d'eaux résiduaires, par au moins une conduite d'aspiration des matières de vidange à traiter, et pouvant être relié à une conduite d'évacuation d'au moins une partie des matières traitées; ledit réservoir étant relié de plus à un réservoir de produits chimiques et à un dispositif de filtration, traversé par les matières traitées.

On connaît par la demande de brevet allemand publiée DE.A.

2 413 243 une installation mobile de traitement d'eaux usées dans laquelle les réactifs chimiques sont introduits dans un réservoir contenant lesdites eaux brusquement et en une seule fois.

Mais dans les installations connues, il n'est pas possible d'obtenir une véritable homogénéisation entre les matières à traiter et les réactifs, réactifs dont l'efficacité est par conséquent fortement diminuée. Les matières traitées peuvent donc difficilement présenter une qualité, notamment au niveau bactériologique, satisfaisant aux conditions requises d'élimination des déchets. En effet, ces conditions sont très strictes. Ainsi, pour les liquides, il est nécessaire d'atteindre un niveau de qualité, en particulier bactériologique, compatible avec le rejet en milieu naturel; et pour les solides, un conditionnement à siccité poussée, permettant la mise en décharge contrôlée, ainsi bien sûr qu'un niveau de qualité bactériologique suffisant.

La présente invention a pour but d'éviter cet inconvénient en proposant un procédé de traitement de matières de vidange, ainsi qu'une installation pour sa mise en oeuvre, permettant de réaliser une homogénéisation parfaite entre lesdites matières et les produits de traitement de façon à obtenir un contact intime entre ceux-ci assurant une qualité de traitement satisfaisant aux conditions requises d'élimination des déchets.

L'invention concerne à cet effet un procédé de traitement de matières de vidange, contenues dans des réservoirs d'eaux résiduaires, au moyen d'une installation autonome mobile, du type comprenant les étapes suivantes:

transférer les matières à traiter du réservoir d'eaux résiduaires dans un réservoir principal logé dans ladite installation mobile;

faire circuler lesdites matières de vidange dans un circuit fermé relié à ses deux extrémités audit réservoir principal;

traiter lesdites matières de vidange avec des produits chimiques, tels que notamment des agents réactifs, de floculation ou autres; et éventuellement,

séparer, notamment par filtration, les matières ainsi traitées en une partie solide et une partie liquide purifiée, caractérisé en ce que lesdits produits chimiques, comprenant au moins deux réactifs, tels que notamment, d'une part du lait de chaux, et d'autre part de l'acide phosphorique ou du gaz carbonique, sont introduits dans le circuit de circulation 18.

De préférence les matières de vidange circulent à plusieurs reprises dans ledit circuit fermé en y subissant des broyages successifs.

Selon une autre caractéristique au moins un agent de floculation est ajouté aux matières de vidange, après l'introduction desdits réactifs.

Notamment on ajoute aux matières de vidange du perchlorure de fer, en tant qu'agent de neutralisation, avant l'introduction du floculant.

Et avant d'évacuer la partie liquide purifiée, on peut y ajouter un acide, en tant qu'agent de neutralisation.

L'invention concerne également une installation autonome mobile de collecte et de traitement de matières de vidange contenues dans des réservoirs d'eaux résiduaires, pour la mise en oeuvre du procédé ci-dessus défini, du type comprenant au moins un réservoir principal 3 de collecte et de traitement pouvant être relié à un réservoir 2 d'eaux résiduaires, par au moins une conduite d'aspiration 4 des matières de vidange à traiter, et pouvant être relié à au moins une conduite d'évacuation 5 d'au moins une partie des matières traitées; ledit réservoir 3 étant relié de plus à au moins un réservoir 6, 7 de produits chimiques et éventuellement à au moins un dispositif de filtration 16, traversé par les matières traitées, et l'installation comprenant un circuit de circulation 18 des matières de vidange dont les deux extrémités peuvent être reliées audit réservoir principal 3, caractérisée par au moins deux réservoirs de stockage 6, 7 de deux agents réactifs, tels que notamment d'une part du lait de chaux, et d'autre part de l'acide phosphorique ou du gaz carbonique, reliés au circuit de circulation 18.

Selon une autre caractéristique de l'installation au moins un dispositif de broyage 22 est intercalé dans le circuit de circulation 18 des eaux résiduaires.

Et un réservoir 32 contenant un agent de floculation peut être relié, soit au circuit de circulation 18 des matières de vidange précité, soit au réservoir principal 3. Un réservoir 38 contenant un acide en tant qu'agent de neutralisation peut également être notamment branché sur la conduite d'évacuation 5, en aval du dispositif de filtration 16. Un réservoir 42 contenant du perchlorure de fer, en tant qu'agent de neutralisation, pouvant encore être branché sur le circuit de circulation 18 des matières de vidange, ou sur le réservoir principal 3.

L'installation peut également comporter au moins une pompe 25 par exemple volumétrique, dont la sortie peut être reliée par l'intermédiaire d'un distributeur 28 deux-voies, d'une part au réservoir principal 3 et d'autre part au dispositif de filtration 16 et dont l'entrée peut être reliée, en parallèle, d'une part directement audit réservoir principal 3 et d'autre part à ce dernier par l'intermédiaire du dispositif de broyage 22.

Enfin une pompe à vide 43 pourra être reliée par l'intermédiaire d'un distributeur 45 deux-voies au réservoir principal 3 ou au dispositif de filtration 16.

La présente invention sera mieux comprise et d'autres détails, caractéristiques et avantages de celle-ci apparaîtront plus clairement à la lumière de la description explicative qui va suivre d'un mode de réalisation actuellement préféré de l'invention, faite en référence aux dessins schématiquement annexés donnés uniquement à titre d'exemple, et dans lesquels:

la figure 1 est une vue de côté schématique de l'installation autonome mobile selon la présente invention; et,

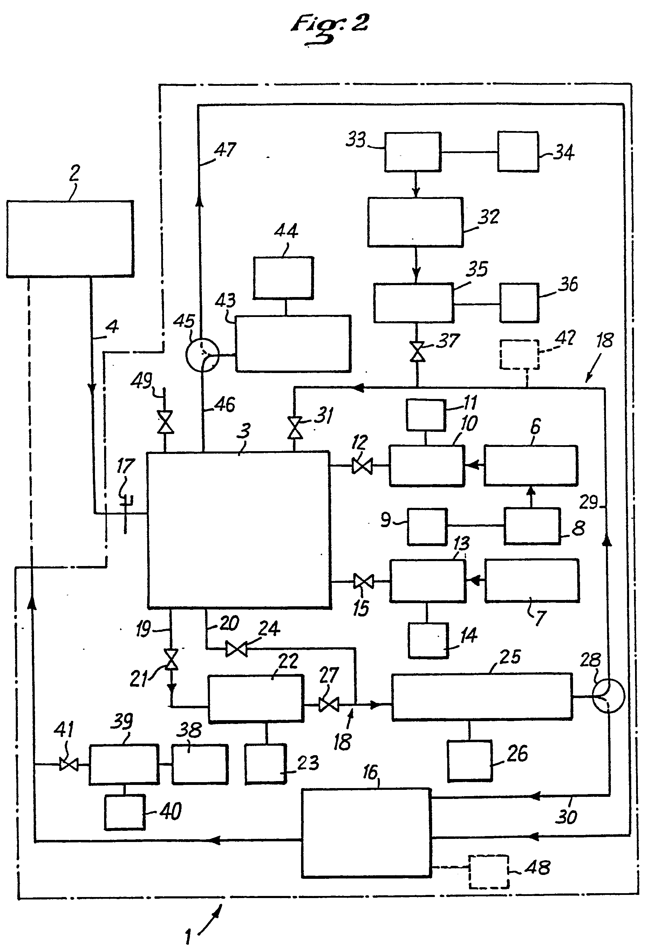

la figure 2 est un schéma synoptique fonctionnel de l'installation selon l'invention.

L'installation autonome mobile 1, selon la présente invention, permet la collecte et le traitement des matières de vidange contenues dans un réservoir 2 d'eaux résiduaires.

L'installation 1 comprend un réservoir principal 3 de collecte et de traitement qui peut être relié au réservoir 2 d'eaux résiduaires par une conduite d'aspiration 4 des matières de vidange à traiter par l'intermédiaire d'une vanne notamment manuelle 17; et à une conduite d'évacuation 5 des matières traitées, débouchant éventuellement dans le réservoir 2 d'eaux résiduaires vidé.

Le réservoir 3 comporte également une vanne 49 de mise à la pression atmosphérique.

Le réservoir principal 3 est relié de plus à un certain nombre de réservoirs de produits chimiques. Ainsi, il peut être relié à des réservoirs de stockage d'agents réactifs, tels que le réservoir 6 pouvant contenir du lait de chaux et le réservoir 7 pouvant contenir de l'acide phosphorique. Le réservoir 6 est muni d'un agitateur 8 actionné par un moteur 9 et est en liaison avec l'entrée d'une pompe 10 actionnée par un moteur 11; une vanne 12 reliant la sortie de la pompe 10 au réservoir principal 3.

Le réservoir 7 est relié à l'entrée d'une pompe 13 actionnée par un moteur 14; une vanne 15 reliant la sortie de la pompe 13 au réservoir principal. Dans le cas où l'on utilise du gaz carbonique à la place de l'acide phosphorique, des bouteilles de gaz carbonique comprimé peuvent être directement reliées au réservoir principal 3.

Le réservoir principal 3 peut être d'autre part relié à un dispositif de filtration 16, constitué par exemple par un filtre à tambour, d'une manière qui sera décrite plus loin; le dispositif de filtration 16 étant relié, à sa sortie, à la conduite 5 d'évacuation des matières traitées.

En particulier, selon l'invention, on prévoit dans l'installation 1 un circuit de circulation 18 des matières de vidange à traiter auquel peuvent éventuellement être reliés les réservoirs 6,7 de stockage d'agents réactifs. On peut prévoir, à l'extrêmité amont du circuit 18, deux conduits de circulation 19 et 20 dont le premier 19 est branché, par l'intermédiaire d'une vanne 21 à l'entrée d'un dispositif de broyage 22 actionné par un moteur 23; le second 20 étant branché par l'intermédiaire d'une vanne 24 à l'entrée d'une pompe par exemple volumétrique 25, actionnée par un moteur 26. On notera que la sortie du dispositif de broyage 22 est reliée par l'intermédiaire d'une vanne 27 au conduit 20, en aval de la vanne 24 et en amont de la pompe volumétrique 25.

La pompe volumétrique 25 peut être reliée, au moyen d'un distributeur deux-voies 28, d'une part au réservoir principal 3 par un conduit 29 (position en traits pleins du distributeur) par l'intermédiaire d'une vanne 31, et d'autre part au dispositif de filtration 16 par un conduit 30 (position en traits interrompus du distributeur).

Le circuit de circulation 18 comprend ainsi, d'amont en aval, deux conduits 19 et 20 branchés en parallèle à la sortie du réservoir principal 3, et dont l'un 19 traverse le dispositif de broyage 22; les deux conduits 19,20 se réunissant en amont d'une pompe notamment volumétrique 25 pouvant être reliée par un conduit 29 au réservoir principal 3.

En outre, un réservoir 32 contenant un agent de floculation, pourvu d'un agitateur 33 actionné par un moteur 34, est relié, par l'intermédiaire d'une pompe 35, actionnée par un moteur 36, et d'une vanne 37 au conduit 29 précité; c'est-à-dire au circuit de circulation 18 des matières de vidange à traiter (ou éventuellement directement au réservoir principal 3).

On prévoit également un réservoir 38 contenant un agent de neutralisation, tel qu'un acide. Le réservoir 38 est en liaison avec l'entrée d'une pompe 39, actionnée par un moteur 40, dont la sortie est reliée, par l'intermédiaire d'une vanne 41, à la conduite 5 d'évacuation des matières traitées en aval du dispositif de filtration 16.

Comme agent de neutralisation, on peut également employer du perchlorure de fer (ou éventuellement du sulfate d'alumine), contenu dans un réservoir 42 relié au conduit de circulation 29 (éventuellement directement au réservoir principal 3).

L'installation 1 comprend enfin une pompe à vide 43, actionnée par un moteur 44, susceptible d'être reliée, par l'intermédiaire d'un distributeur 45 deux-voies, d'une part par un conduit 46 (position en traits pleins) au réservoir principal 3, et d'autre part par un conduit 47 (position en traits interrompus) au dispositif de filtration 16. On peut également prévoir une pompe à vide 48 particulière au dispositif de filtration 16.

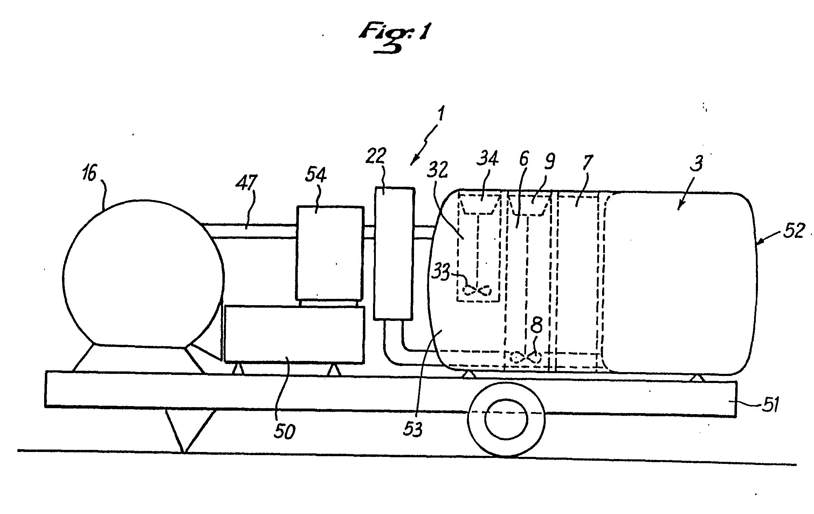

L'installation 1 peut être montée sur une remorque de camion 51 (figure 1) ou un chassis (non représenté). Les différents réservoirs peuvent être logés dans une citerne 52 contenant de plus une réserve 53 d'eau de lavage; les différents moteurs étant actionnés par un groupe électrogène 54, ou toute autre source motrice appropriée.

L'installation 1, selon l'invention, fonctionne de la façon suivante.

Dans les conditions initiales, la conduite 4 d'aspiration des matières de vidange à traiter étant reliée au réservoir 2 d'eaux résiduaires, toutes les vannes précitées sont fermées et les distributeurs 28 et 45 sont reliés, respectivement, à la pompe volumétrique 25 et au réservoir principal 3; et audit réservoir 3 et à la pompe à vide 43.

A partir de ces conditions initiales, le moteur 44 est mis en marche de façon que la pompe à vide 43 puisse faire le vide dans le réservoir principal 3. On ouvre ensuite la vanne 17 et les matières à traiter contenues dans le réservoir 2 d'eaux résiduaires sont aspirées dans le réservoir principal 3. Quand le réservoir 3 est plein, on arrête le moteur 44 de la pompe 43, et on referme la vanne 17. On ouvre ensuite la vanne 49 pour mettre le réservoir principal 3 et son contenu à la pression atmosphérique.

Pendant ce temps, on a mis en route, simultanément, les moteurs 9 et 34 actionnant les agitateurs 8 et 33 des réservoirs 6 et 32 contenant le lait de chaux et le floculant, respectivement.

On met ensuite en marche le moteur 26 de la pompe volumétrique 25, et, lorsque cela est nécessaire, le moteur 23 du dispositif de broyage 22; et on ouvre les vannes 21,27 et 31 prévues dans le circuit de circulation 18. Les matières à traiter sont ainsi aspirées hors du réservoir principal 3, broyées puis réintroduites dans ledit réservoir 3 à travers le distributeur 28 et le conduit 29. Les solides contenus dans les matières à traiter sont donc broyés, éventuellement à plusieurs reprises, et ces matières se présentent alors sous une forme liquide, plus ou moins visqueuse.

Le moteur 11 de la pompe 10 étant mis en route et la vanne 12 étant ouverte, on introduit alors un premier réactif, notamment du lait de chaux contenu dans le réservoir 6 et homogénéisé par agitation, dans le réservoir principal 3 où il se mélange aux matières à traiter broyées. De même, après mise en marche du moteur 14 de la pompe 13 et ouverture de la vanne 15, on introduit un second réactif, tel que par exemple de l'acide phosphorique, contenu dans le réservoir 7, dans le réservoir principal 3. Dans le cas où l'on utilise comme second réactif du gaz carbonique, l'ensemble moto-pompe 13,14 est supprimé, le gaz carbonique étant stocké sous pression dans le réservoir 7. Ces réactifs peuvent éventuellement être introduits dans le circuit de circulation 18.

On arrête alors les moteurs 9, 11 et 14, ainsi que le moteur 26 de la pompe 25, et on ferme les vannes 12 et 15 selon toute séquence appropriée.

Après éventuellement mise hors circuit du dispositif de broyage 22 par arrêt du moteur 23 et fermeture des vannes 21,27, on ouvre la vanne 24 et on remet en marche le moteur 26 de la pompe 25 de sorte que les matières à traiter broyées et mélangées aux deux réactifs circulent, éventuellement à plusieurs reprises, dans le circuit fermé 18. On peut ainsi réaliser une homogénéisation parfaite entre les matières à traiter et les produits de traitement de façon à obtenir un contact intime entre ceux-ci assurant une qualité de traitement suffisante.

Après mise en route du moteur 36 de la pompe 35 et ouverture de la vanne 37, on peut introduire dans le circuit de circulation 18 (éventuellement dans le réservoir principal 3) du floculant contenu dans le réservoir 32 et homogénéisé par agitation; floculant qui se mélange aux matières à traiter et aux réactifs.

Avant l'addition du floculant, on peut éventuellement introduire dans le circuit de circulation 18 (éventuellement dans le réservoir principal 3) un agent de neutralisation, tel que du perchlorure de fer, contenu dans le réservoir 42.

Lorsque le traitement physico-chimique est terminé, on arrête le moteur 26 de la pompe 25 et on commande les distributeurs 45 et 28 pour que ceux-ci, à ce moment, relient, au dispositif de filtration 16, respectivement la pompe à vide 43 et la pompe volumétrique 25. On met en marche le moteur 44 de la pompe 43 de façon à faire le vide dans le dispositif de filtration 16. Ensuite, on remet en marche le moteur 26 de la pompe 25 de sorte que les matières contenues dans le réservoir principal 3 sont transférées au dispositif de filtration 16 où elles sont filtrées sous vide.

Les matières solides sont recueillies dans un réservoir 50, tandis que les matières liquides purifiées sont évacuées par la conduite 5 et éventuellement réinjectées dans le réservoir d'eaux résiduaires 2. Le liquide de neutralisation contenu dans le réservoir 38 peut alors être introduit dans la conduite 5 par commande de l'ensemble moto-pompe 39,40 et ouverture de la vanne 41.

On arrête enfin les différents moteurs et l'on remet vannes et distributeurs en position initiale, pour un nouveau cycle de traitement.

## Revendications

1. Procédé de traitement de matières de vidange, contenues dans des réservoirs d'eaux résiduaires, au moyen d'une installation autonome mobile, du type comprenant les étapes suivantes:

transférer les matières à traiter du réservoir d'eaux résiduaires dans un réservoir principal logé dans ladite installation mobile;

faire circuler lesdites matières de vidange dans un circuit fermé relié à ses deux extrémités audit réservoir principal;

traiter lesdites matières de vidange avec des produits chimiques, tels que notamment des agents réactifs, de floculation ou autres; et éventuellement,

séparer, notamment par filtration, les matières ainsi traitées en une partie solide et une partie liquide purifiée, caractérisé en ce que lesdits produits chimiques, comprenant au moins deux réactifs, tels que notamment, d'une part du lait de chaux, et d'autre part de l'acide phosphorique ou du gaz carbonique, sont introduits dans le circuit de circulation (18).

2. Procédé selon la revendication 1, caractérisé en ce que les matières de vidange, avant ledit traitement et/ou éventuellement pendant ledit traitement, sont soumises à au moins un broyage.

3. Procédé selon la revendication 2, caractérisé en ce que les matières de vidange circulent à plusieurs reprises dans ledit circuit fermé en y subissant des broyages successifs.

4. Procédé selon l'une quelconque des revendications 1 à 3, caractérisé en ce qu'au moins un agent de floculation est ajouté aux matières de vidange, après l'introduction desdits réactifs.

5. Procédé selon la revendication 4, caractérisé en ce qu'on ajoute aux matières de vidange du perchlorure de fer, en tant qu'agent de neutralisation, avant l'introduction du floculant.

6. Procédé selon l'une quelconque des revendications 1 à 4, caractérisé en ce qu'avant d'évacuer la partie liquide purifiée, on y ajoute un acide, en tant qu'agent de neutralisation.

7. Installation autonome mobile de collecte et de traitement de matières de vidange contenues dans des réservoirs d'eaux résiduaires, pour la mise en oeuvre du procédé selon l'une quelconque des revendications 1 à 6, du type comprenant au moins un réservoir principal (3) de collecte et de traitement pouvant être relié à un réservoir (2) d'eaux résiduaires, par au moins une conduite d'aspiration (4) des matières de vidange à traiter, et pouvant être relié à au moins une conduite d'évacuation (5) d'au moins une partie des matières traitées; ledit réservoir (3) étant relié de plus à au moins un réservoir (6, 7) de produits chimiques et éventuellement à au moins un dispositif de filtration (16), traversé par les matières traitées, et l'installation comprenant un circuit de circulation (18) des matières de vidange dont les deux extrémités peuvent être reliées audit réservoir principal (3), caractérisée par au moins deux réservoirs de stockage (6, 7) de deux agents réactifs, tels que notamment d'une part du lait de chaux, et d'autre part de l'acide phosphorique ou du gaz carbonique, reliés au circuit de circulation (18).

8. Installation selon la revendication 7, caractérisée en ce qu'au moins un dispositif de broyage (22) est intercalé dans le circuit de circulation (18) des eaux résiduaires.

9. Installation selon la revendication 7 ou la revendication 8, caractérisée par au moins un réservoir (32) contenant un agent de floculation pouvant être relié, soit au circuit de circulation (18) des matières de vidange précité, soit au réservoir principal (3).

10. Installation selon l'une quelconque des revendications 7 à 9, caractérisée par au moins un réservoir (38) contenant un acide en tant qu'agent de neutralisation, pouvant être notamment branché sur la conduite d'évacuation (5), en aval du dispositif de filtration (16).

11. Installation selon l'une quelconque des revendications 7 à 9, caractérisée par au moins un réservoir (42) contenant du perchlorure de fer, en tant qu'agent de neutralisation, pouvant être branché sur le circuit de circulation (18) des matières de vidange, ou sur le réservoir principal (3).

12. Installation selon l'une quelconque des revendications 7 à 11, caractérisée par au moins une pompe (25) par exemple volumétrique, dont la sortie peut être reliée par l'intermédiaire d'un distributeur (28) deux-voies, d'une part au réservoir principal (3) et d'autre part au dispositif de filtration (16); et dont l'entrée peut être reliée, en parallèle, d'une part directement audit réservoir principal (3) et d'autre part à ce dernier par l'intermédiaire du dispositif de broyage (22).

13. Installation selon l'une quelconque des revendications 7 à 12, caractérisée par au moins une pompe à vide (43) qui peut être reliée par l'intermédiaire d'un distributeur (45) deux-voies au réservoir principal (3) ou au dispositif de filtration (16).

**Patentansprüche**

1. Verfahren zur Behandlung von Rückständen aus Abwasserbehältern mittels einer fahrbaren, selbständig arbeitenden Anlage, bei dem

die zu behandelnden Rückstände aus dem Abwasserbehälter in einen in der fahrbaren Anlage befindlichen Hauptbehälter überführt werden,

die Rückstände in einem mit beiden Enden des Hauptbehälters verbundenen geschlossenen Kreislauf umgewälzt werden,

die Rückstände mit chemischen Produkten, insbesondere Reagenzien, Ausflockmitteln oder dergleichen, behandelt werden und

die so behandelten Rückstände schließlich durch ein geeignetes Verfahren, z.B. durch Filtration, in einen festen und einen gereinigten flüssigen Bestandteil getrennt werden, dadurch gekennzeichnet, daß die die mindestens zwei Reagenzien, insbesondere Kalkmilch einerseits und Phosphorsäure oder Kohlensäure andererseits, enthaltenden chemischen Mittel in den Umwälzkreislauf (18) eingeführt werden.

2. Verfahren nach Anspruch 1, dadurch gekennzeichnet, daß die Rückstände vor bzw. gegebenenfalls während der Behandlung zumindest einem Zerkleinerungsvorgang unterzogen werden.

3. Verfahren nach Anspruch 2, dadurch gekennzeichnet, daß die Rückstände mehrmals in dem geschlossenen Kreislauf umgewälzt und dabei sukzessive zerkleinert werden.

4. Verfahren nach einem der Ansprüche 1 bis 3, dadurch gekennzeichnet, daß den Rückständen nach der Zuführung der Reagenzien mindestens ein Ausflockmittel zugegeben wird.

5. Verfahren nach Anspruch 4, dadurch gekennzeichnet, daß den Rückständen vor der Zugabe des Ausflockmittels Eisenperchlorid als Neutralisationsmittel zugegeben wird.

6. Verfahren nach einem der Ansprüche 1 bis 4, dadurch gekennzeichnet, daß der gereinigten Flüssigkeit vor dem Verlassen der Anlage eine Säure als Neutralisationsmittel zugegeben wird.

7. Fahrbare, selbständig arbeitende Anlage zum Sammeln und zur Behandlung von Rückständen aus Abwasserbehältern für die Durchführung des Verfahrens nach einem der Ansprüche 1 bis 6, bestehend aus mindestens einem Hauptbehälter (3) zum Sammeln und Behandeln der Rückstände, der über mindestens eine Ansaugleitung (4) für die zu behandelnden Rückstände mit einem Abwasserbehälter (2) verbunden und an mindestens eine Abführleitung (5) für mindestens einen Teil der behandelten Rückstände angeschlossen werden kann, wobei der Behälter (3) zusätzlich mit mindestens einem Behälter (6, 7) für chemische Mittel und gegebenenfalls mit mindestens einer von den behandelten Rückständen durchströmten Filtereinrichtung (16) verbunden ist und die Anlage einen Umwälzkreislauf (18) für die Rückstände aufweist, dessen Enden mit dem Hauptbehälter (3) verbindbar sind, dadurch gekennzeichnet, daß mindestens zwei Vorratsbehälter (6, 7) für zwei Reagenzien, insbesondere Kalkmilch einerseits und Phosphorsäure oder Kohlensäure andererseits, vorgesehen und mit dem Umwälzkreislauf (18) verbunden sind.

8. Anlage nach Anspruch 7, dadurch gekennzeichnet, daß mindestens eine Zerkleinerungseinrichtung (22) in den Umwälzkreislauf (18) für die Abwässer eingeschaltet ist.

9. Anlage nach Anspruch 7 oder Anspruch 8, dadurch gekennzeichnet, daß mindestens ein ein Ausflockmittel enthaltender Behälter (32) vorgesehen ist, der mit dem Umwälzkreislauf (18) oder dem Hauptbehälter (3) verbindbar ist.

10. Anlage nach einem der Ansprüche 7 bis 9, dadurch gekennzeichnet, daß mindestens ein eine Säure als Neutralisationsmittel enthaltender Behälter (38) vorgesehen ist, der insbesondere nach der Filtereinrichtung (16) an die Abführleitung (5) angeschlossen werden kann.

11. Anlage nach einem der Ansprüche 7 bis 9, dadurch gekennzeichnet, daß mindestens ein Eisenchlorid als Neutralisationsmittel enthaltender Behälter (42) vorgesehen ist, der mit dem Umwälzkreislauf (18) für die Rückstände oder mit dem Hauptbehälter (3) verbunden werden kann.

12. Anlage nach einem der Ansprüche 7 bis 11, dadurch gekennzeichnet, daß mindestens eine Pumpe (25), z.B. eine Dosierpumpe, vorgesehen ist, deren Auslaß über ein Zweiwegeventil (28) einerseits mit dem Hauptbehälter (3) und andererseits mit der Filtereinrichtung (16) verbindbar ist und deren Einlaß parallel einmal direkt und zum anderen über die Zerkleinerungseinrichtung (22) mit dem Hauptbehälter (3) verbindbar ist.

13. Anlage nach einem der Ansprüche 7 bis 12, dadurch gekennzeichnet, daß mindestens eine Unterdruckpumpe (43) vorgesehen ist, die über ein Zweiwegeventil (45) mit dem Hauptbehälter (3) oder der Filtereinrichtung (16) verbunden werden kann.

**Claims**

1. Process for the treatment of waste matter contained in waste-water tanks, by means of an independent, mobile installation, of the type comprising the following steps of:
transferring the matter to be treated from the waste-water tank into a principal tank housed in said mobile installation;

causing said waste matters to circulate in a closed circuit connected at its two ends to said principal tank;
treating said waste matters with chemical products, such as in particular reagents, flocculation or other agents; and possibly, separating, particularly by filtration, the matters thus treated into a solid part and a purified liquid part, characterized in that said chemical products, comprising at least two reagents, such as in particular, on the one hand, milk of lime, and, on the other hand, phosphoric acid or carbon dioxide gas, are introduced into the circulation circuit (18).

2. Process according to Claim 1, characterized in that the waste matters, before said treatment and/or possibly during said treatment, are subjected to at least one grinding.

3. Process according to Claim 2, characterized in that the waste matters circulate several times in said closed circuit, undergoing successive grindings therein.

4. Process according to any one of Claims 1 to 3, characterized in that at least one flocculation agent is added to the waste matters, after introduction of said reagents.

5. Process according to Claim 4, characterized in that perchloride of iron, as neutralization agent, is added to the waste matters before the introduction of the flocculant.

6. Process according to any one of Claims 1 to 4, characterized in that, before evacuating the purified liquid part, an acid, as neutralization agent, is added thereto.

7. Independent mobile installation for collecting and treating waste matters contained in waste-water tanks, for carrying out the process according to any one of Claims 1 to 6, of the type comprising at least one principal tank (3) for collection and treatment adapted to be connected to a waste-water tank (2), by at least one conduit (4) for sucking the waste matters to be treated, and able to be connected to at least one conduit (5) for evacuating at least a part of the treated matters; said tank (3) being in addition connected to at least one tank (6, 7) of chemical products and possibly to at least one filtration device (16), traversed by the treated matters, and the installation comprising a circuit (18) for circulating the waste matters of which the two ends may be connected to said principal tank (3), characterized by at least two tanks (6, 7) for storing two reagents, such as in particular, on the one hand, milk of lime and, on the other hand, phosphoric acid or carbon dioxide gas, connected to the circulation circuit (18).

8. Installation according to Claim 7, characterized in that at least one grinding device (22) is incorporated in the waste-water circulation circuit (18).

9. Installation according to Claim 7 or Claim 8, characterized by at least one tank (32) containing a flocculation agent which may be connected either to the waste matter circulation circuit (18) mentioned above, or to the principal tank (3).

10. Installation according to any one of Claims 7 to 9, characterized by at least one tank (38) containing an acid as neutralization agent, able to be connected in particular to the evacuation conduit (5), downstream of the filtration device (16).

11. Installation according to any one of Claims 7 to 9, characterized by at least one tank, (42) containing perchloride of iron, as neutralization agent, able to be connected to the waste matter circulation circuit (18), or to the principal tank (3).

12. Installation according to any one of Claims 7 to 11, characterized by at least one pump (25), for example volumetric, of which the outlet may be connected via a two-way valve (28), on the one hand, to the principal tank (3) and, on the other hand, to the filtration device (16); and of which the inlet may be connected, in parallel, on the one hand, directly to said principal tank (3) and, on the other hand, to the latter via the grinding device (22).

13. Installation according to any one of Claims 7 to 12, characterized by at least one vacuum pump (43) which may be connected via a two-way valve (45) to the principal tank (3) or to the filtration device (16).

*Fig.1*

# Fig. 2